# EUROPÄISCHE PATENTSCHRIFT

(11) **EP 2 545 315 B1**
(45) Veröffentlichungstag und Bekanntmachung des Hinweises auf die Patenterteilung: **07.12.2022**
(21) Anmeldenummer: 11707807.1
(22) Anmeldetag: 08.03.2011
(51) Int. Cl.: F16L 33/34

(54) **VORRICHTUNG ZUM VERBINDEN EINER EIN FLUID FÜHRENDEN LEITUNG MIT EINEM BENACHBARTEN BAUTEIL**
DEVICE FOR CONNECTING A FLUID-CONDUCTING CHANNEL TO AN ADJACENT COMPONENT
DISPOSITIF POUR L'ASSEMBLAGE D'UNE CONDUITE TRANSPORTANT UN FLUIDE À UNE PIÈCE ADJACENTE

(30) Priorität: 09.03.2010 DE 102010010765
(43) Veröffentlichungstag der Anmeldung: 16.01.2013
(73) Patentinhaber: Eugen Forschner GmbH, 784549 Spaichingen (DE)
(72) Erfinder: CHALOUPKA, Thomas, 78549 Spaichingen (DE); BRANDT, Thomas, 78549 Spaichingen (DE)
(74) Vertreter: Keller Schneider Patentanwaltsgesellschaft mbH
(86) Internationale Anmeldenummer: PCT/EP2011/001129
(87) Internationale Veröffentlichungsnummer: WO 2011/110326

(56) Entgegenhaltungen:
- EP-A1- 0 119 520
- EP-A2- 1 505 328
- WO-A1-2005/080850
- DE-C1- 3 604 924
- FR-A1- 2 642 155

## Beschreibung

Die Erfindung betrifft eine Vorrichtung zum Verbinden einer ein Fluid führenden Leitung mit einem benachbarten Bauteil.

Aus der EP 1 505 328 A2 ist eine Kupplung zum Verbinden von Leitungen gemäß dem Oberbegriff des Anspruchs 1 bekannt, bei der ein Ende eines Schlauchs in einen mit einem Klebstoff gefüllten Ringraum eingeschoben wird. Die Einschubtiefe ist dabei nicht definiert und der Klebstoff quillt infolge dessen unkontrolliert über die kürzere Außenwand des Ringraums nach außen. Eine undefinierte Einschubtiefe und ein daraus resultierendes Überquellen des Klebstoffs nach innen sind auch bei der Schlauchverzweigung gemäß DE 36 04 924 A1 nachteilig.

Aus der DE 379 413 A ist eine weitere Vorrichtung bekannt, bei der ein Ende eines Rohres in eine erweiterte Muffe eines benachbarten Rohres eingeschoben und durch einen in einen zwischen den beiden Rohren im Bereich der Muffe gebildeten Ringspalt eingebrachten Klebstoff miteinander verbunden wird. Die wirksame Verbindungsfläche des Klebstoffs ist auf die Außenseite des im Durchmesser kleineren Rohres begrenzt.

Aus der EP 1 721 097 B1 ist eine Vorrichtung bekannt, bei der die Verbindung zwischen einem mit einem Ende eines Schlauches verbundenen Konnektor und einer äußeren Ummantelung durch ein auf den Schaft des Konnektors aufgeschobenes Dichtelement geschaffen wird, wobei das Dichtelement eine in radialer Richtung verlaufende Ringnut aufweist, in welche ein nach innen vorspringender Bund an der Ummantelung eingreift. Da der Schaft des Konnektors typischerweise eine Verzahnung für eine bessere Fixierung des aufgeschobenen Schlauches aufweist, wird ein dichtes Anliegen des Dichtelement am Schaft erschwert. Das Dichtelement, das mit seiner Ringnut das Anschlussprofil für die Ummantelung herstellt, ist ein separates Bauteil, durch welches Herstellungs- und Montagekosten vergrößert werden.

Nachteilig ist weiterhin, dass das Dichtelement auf dem relativ dünnwandigen Schaft des Konnektors befestigt wird, wodurch die Stabilität der Befestigung insgesamt sehr gering ist. Das Dichtelement benötigt darüber hinaus relativ viel Bauraum in axialer Richtung.

Der Erfindung liegt die Aufgabe zugrunde, eine Vorrichtung zum Verbinden einer ein Fluid führenden Leitung mit einem benachbarten Bauteil zu schaffen, durch welche die Verbindung einfacher und stabiler realisierbar ist.

Diese Aufgabe wird durch die Merkmale des Patentanspruchs 1 gelöst. Vorteilhafte Ausgestaltungen der Erfindung sind den Unteransprüchen zu entnehmen.

Die Erfindung sieht vor, dass das Bauteil zusätzlich mit einem das erste Teil umgebenden zweiten Teil versehen ist und das Ende der Leitung in einem zwischen dem ersten Teil und dem zweiten Teil gebildeten Ringraum angeordnet und mittels eines den Ringraum wenigstens zum Teil ausfüllenden Klebstoffs fixiert ist. Durch die Einbettung des Endes der Leitung zwischen dem ersten und dem zweiten Teil wird die Leitung an ihrer Innenseite und an ihrer Außenseite vom Klebstoff gehalten.

Gemäß der Erfindung ist vorgesehen, dass die Leitung mit dem ersten Teil einen sehr engen Ringspalt bildet. Dieser wird bevorzugt dadurch realisiert, dass der Innendurchmesser der Leitung und der Außendurchmesser des ersten Teils eine Presspassung bilden. In den dadurch entstehenden Ringspalt dringt der flüssige Klebstoff nur in einer sehr dünnen Schicht ein und das axiale Vordringen in den Ringspalt ist aufgrund des relativ schnellen Aushärtens der dünnen Klebstoffschicht begrenzt.

Gemäß der Erfindung ist vorgesehen, dass die Leitung mit dem zweiten Teil einen weiten Ringspalt bildet, der eine bedeutend größere Ausdehnung hat, als der im vorstehenden Absatz genannte Ringspalt zwischen Leitung und dem ersten Teil.

Gemäß der Erfindung ist vorgesehen, dass das erste Teil eine kürzere axiale Länge aufweist als die axiale Länge des zweiten Teils. In Verbindung mit den Abmessungen der Ringspalte und der Viskosität des verwendeten Klebstoffs wird dadurch erreicht, dass die Klebstoffgrenze sowohl im ersten inneren Ringspalt als auch im zweiten äußeren Ringspalt innerhalb des Bauteils bleibt und kein Klebstoff in das Innere der Leitung oder nach außen über das zweite Teil hinaus auf den Mantel der Leitung austritt.

Gemäß der Erfindung ist vorgesehen, dass der Ringraum einen Boden aufweist und dass am ersten Teil eine sich zum Boden hin erweiternde Schräge ausgebildet ist, die einen vom Boden beabstandeten Anschlag für das Ende der Leitung bildet. Hierdurch ist gewährleistet, dass die dem Bauteil zugewandte Stirnseite der Leitung vom Boden des Ringraums beabstandet und dadurch ebenfalls vom Klebstoff umgeben ist.

Es ist weiterhin besonders vorteilhaft, wenn die Leitung von einem flexiblen Schlauch und das Bauteil von einem Konnektor gebildet werden, der zur Verbindung mit wenigstens einem benachbarten Bauteil dient. Der Schlauch ist bevorzugt mehrlagig ausgebildet, wobei eine der Lagen bevorzugt von einem Verstärkungsgewebe gebildet wird, welches an der dem Boden zugewandten Stirnseite des Schlauches unmittelbar in den Klebstoff eingebettet ist.

Das benachbarte Bauteil weist in einer ersten Variante ebenfalls einen Fluid führenden Durchtritt auf. Gemäß einer weiteren Variante kann das Bauteil einen permanenten oder nach Art eines Ventils steuerbaren Verschluss für die Leitung bilden. Gemäß einer weiteren, separat oder in Kombination möglichen Variante kann das benachbarte Bauteil auch von einer die Leitung umgebenden Ummantelung gebildet werden. Die Ummantelung greift bevorzugt mit einem Formteil in eine Nut an einem Verbindungsteil ein, das am Bauteil einstückig ausgebildet oder separat ausgebildet und befestigt ist.

Ein Verfahren zum Verbinden einer ein Fluid führenden Leitung mit einem Bauteil, wobei die Leitung an wenigstens einem Ende mit einem inneren Querschnitt dichtend an einem mit einer Bohrung zur Weiterleitung des Fluids versehenen ersten Teil des Bauteils angeordnet ist und gegenüber diesem fixiert wird, zeichnet sich dadurch aus, dass das Bauteil zusätzlich mit einem das erste Teil umgebenden zweiten Teil versehen ist und das Ende der Leitung in einen zwischen dem ersten Teil und dem zweiten Teil gebildeten, wenigstens zum Teil mit flüssigem Klebstoff gefüllten Ringraum eingeschoben und durch Aushärten des Klebstoffs in der eingeschobenen Position fixiert wird. Bevorzugt ist dabei, dass die Leitung mit einer Presspassung auf das erste Teil aufgeschoben wird, wobei der Klebstoff in den schmalen Ringspalt zwischen der Leitung und dem ersten Teil nur soweit eintritt, dass er nicht über das Ende des ersten Teils hinaus mit dem inneren Querschnitt der Leitung in Berührung kommt.

Bevorzugt für die Durchführung des Verfahrens ist weiterhin, dass das Ende der Leitung von einem im Ringraum zwischen dem ersten Teil und dem zweiten Teil angeordneten Boden beabstandet angeordnet wird, so dass die dem Boden zugewandte Stirnseite der Leitung mit vom Klebstoff umgeben ist. Nachfolgend wird eine erfindungsgemäße Vorrichtung anhand mehrerer Ausführungsbeispiele unter Bezugnahme auf die Zeichnung näher erläutert. Es zeigt:
- Fig. 1: einen Längsschnitt durch eine erste Ausführungsform einer Vorrichtung;
- Fig. 2: einen Längsschnitt durch eine zweite Ausführungsform einer Vorrichtung , die nicht im Rahmen der Erfindung liegt, mit einem am Konnektor einstückig ausgebildeten Verbindungsteil; und
- Fig. 3: einen Längsschnitt durch eine dritte Ausführungsform einer Vorrichtung, die nicht im Rahmen der Erfindung liegt, mit einem separat ausgebildeten, am Konnektor angeordneten Verbindungsteil.

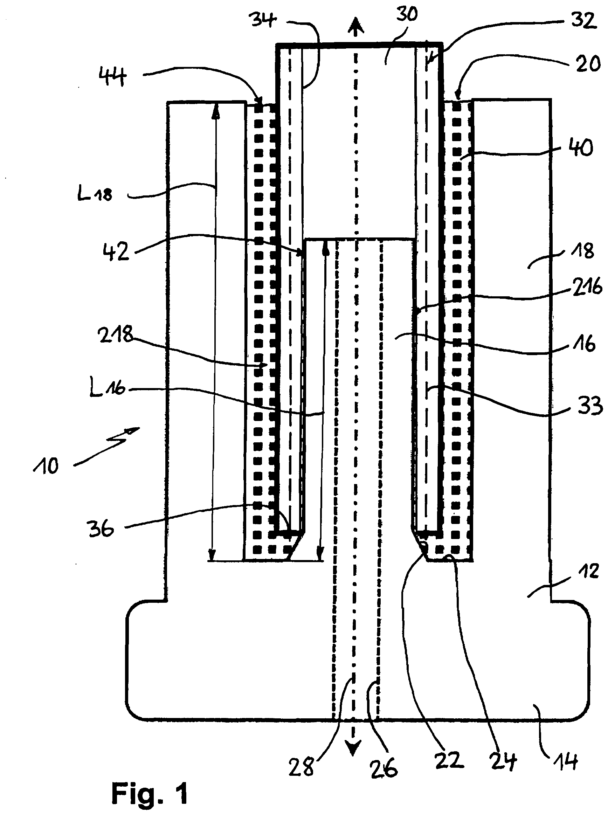

Eine insgesamt mit 10 bezeichnete Vorrichtung zur Verbindung einer Fluid führenden Leitung 30 mit einem Bauteil 12 ist in Figur 1 in einer ersten Ausführungsform dargestellt. Die Fluid führende Leitung 30 wird dabei von einem Schlauch 30 gebildet, dessen innerer Durchlass 34 von einer Wandung 32 begrenzt wird. Die Wandung 32 ist bevorzugt mehrlagig ausgeführt, wobei eine der Lagen bevorzugt von einem Verstärkungsgewebe 33 gebildet ist. Eine innere Lage der Wandung 32 ist aus einem gegenüber dem im Inneren des Schlauches 30 geführten Fluid resistenten Material gefertigt.

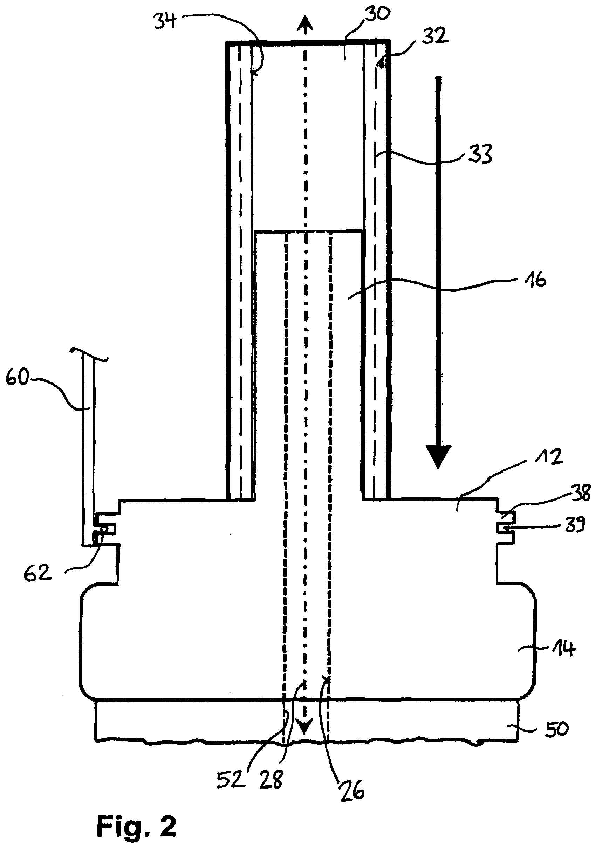

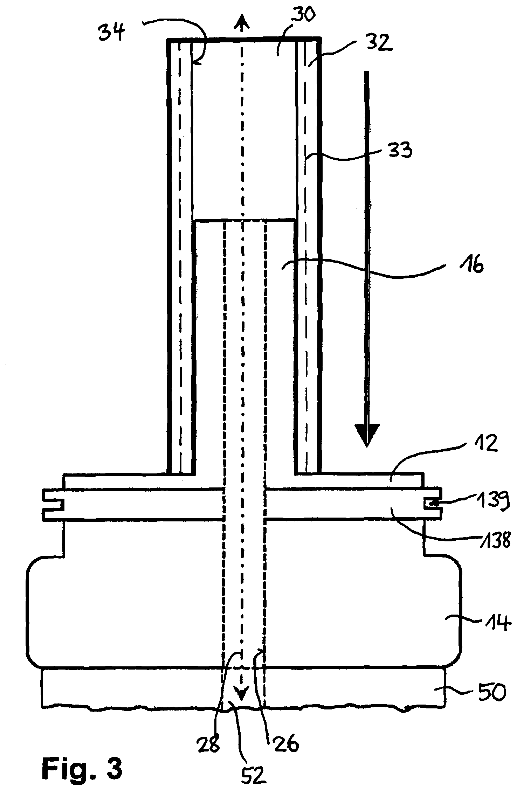

Das Bauteil 12 ist als Konnektor 12 ausgebildet, der die Verbindung zwischen einem Ende des Schlauches 30 und zumindest einem benachbarten Bauteil herstellt. Der Konnektor 12 ist zu diesem Zweck in seinem in den Fign. 1 bis 3 untenliegenden Teil mit einem Anschlussstück 14 versehen, das zur Verbindung mit dem benachbarten Bauteil 50 (siehe Figur 2 und 3) dient, das bevorzugt eine Bohrung 52 aufweist. Die Details der Verbindung des Anschlussstücks 14 mit dem benachbarten Bauteil 50 sind nicht Gegenstand dieser Erfindung und wurden daher in den Figuren weggelassen.

Der Konnektor 12 weist in der in Figur 1 dargestellten Variante auf seiner dem Ende des Schlauches 30 zugewandten Seite ein als innerer Kragen 16 ausgebildetes rohrförmiges erstes Teil auf, welches eine das gesamte Bauteil 12 in Längsrichtung durchdringende Bohrung 26 umgibt. Das als innerer Kragen 16 ausgebildete erste Teil wird unter Bildung eines hohlen Ringraums 20 mit Abstand von einem als äußerer Kragen 18 ausgebildeten rohrförmigen zweiten Teil umgeben. Der Ringraum 20 wird nach unten von einem Boden 24 begrenzt. Am Übergang vom inneren Kragen 16 zum Boden 24 ist eine sich zum Boden 24 hin erweiternde ringförmige Schräge 22 ausgebildet. Der innere Kragen 16 ist mit dem äußeren Kragen 18 und dem Schlauch 30 koaxial zu einer Mittellängsachse 28 des Schlauches 30 bzw. des Konnektors 12 angeordnet.

Der Schlauch 30 wird mit dem mit dem Konnektor 12 zu verbindenden Ende mit seiner Wandung 32 in Form einer Presspassung über den inneren Kragen 16 geschoben. Dabei stößt die Stirnseite 36 des Schlauches 30 an der Schräge 22 an, so dass die Stirnseite 36 des Schlauchs 30 einen Abstand zum Boden 24 des Ringraums 20 bildet. Vor dem Einschieben des Schlauchs 30 in den Ringraum 20 wird dieser mit einem flüssigen Klebstoff 40 teilweise gefüllt. Die Menge des Klebstoffs 40 und dessen Viskosität sind dabei so gewählt, dass ein geringer Teil des Klebstoffs 40 in einen ersten inneren Ringspalt 216 zwischen der Wandung 32 des Schlauchs 30 und der Außenwand des inneren Kragens 16 kriecht, während die restliche Menge des Klebstoffs 40 den axialen Spalt zwischen der Stirnseite 36 des Schlauchs 30 und dem Boden 24 des Ringraums 20 ebenso füllt wie den größeren äußeren Ringspalt 218 zwischen der äußeren Mantelfläche des Schlauchs 30 und der Innenseite des äußeren Kragens 18.

Die Klebstoffgrenze 42 des Klebstoffs 40 im inneren Ringspalt 216 liegt dabei nach dem Einschieben des Schlauchs 30 kurz unterhalb des oberen Randes des inneren Kragens 16.

Die Klebstoffgrenze 44 des Klebstoffs 40 im äußeren Ringspalt 218 liegt nach dem Einschieben des Schlauchs 30 kurz unterhalb des oberen Randes des äußeren Kragens 18.

Das Ende des Schlauchs 30 ist nach dem Aushärten des Klebstoffs 40 durch die Verbindung des Schlauchs 30 an seiner Innenseite, seiner Stirnseite und seiner Außenseite dauerhaft fest und dicht gegenüber dem Konnektor 12 fixiert.

Die in den Fign. 2 und 3 gezeigten Ausführungsformen können abweichend von der bildlichen Darstellung ebenfalls mit einem inneren Kragen 16 und einem äußeren Kragen 18 ausgebildet sein, so wie dies vorstehend in Verbindung mit der ersten Ausführungsform gemäß Figur 1 beschrieben wurde.

In Figur 2 ist der Konnektor 12 in seinem oberen Bereich einstückig mit einem Verbindungsteil 38 versehen, durch welches am Außenmantel des Konnektors 12 eine radiale ringförmige Nut 39 ausgebildet ist. Diese Nut 39 dient zur Befestigung einer Ummantelung 60, so wie dies im linken Teil der Figur 2 angedeutet ist. Die Ummantelung 60 weist an ihrer Innenseite einen beispielsweise als nach innen vorspringenden Bund ausgebildetes Formteil 62 auf, das in die Nut 39 eingreift. Eine Ummantelung 60 des Schlauchs 30 ist besonders in solchen Fällen wichtig, in denen ein Austreten eines Fluids aus dem Schlauch 30 auch bei einer Beschädigung des Schlauchs 30 unbedingt verhindert werden muss, in denen die Temperatur des Fluids auf einem bestimmten Niveau gehalten werden muss und/oder in denen eine vom Fluid ausgehende Explosionsgefahr unterbunden werden muss. Der in den Fign. 1 bis 3 dargestellte Schlauch 30 mit der Ummantelung 60 wird beispielsweise als beheizbarer Schlauch für eine Kraftstoffleitung oder für eine Harnstoffleitung in einem Fahrzeug verwendet.

Beim Ausführungsbeispiel gemäß Figur 3 ist das Verbindungsteil 138 mit einer daran vorgesehenen Ringnut 139 als separates Bauteil ausgebildet und am Außenumfang des Konnektors 12 fixiert.

Die Befestigungsteile 38 beziehungsweise 138 gemäß den Fign. 2 und 3 bieten eine wesentlich stabilere Befestigung für die äußeren Ummantelung 60, als dies durch das Dichtungselement in der eingangs erwähnten EP 1 721 097 B1 der Fall ist. Die einstückige Ausbildung des Befestigungsteils 38 oder die separate Ausbildung des Befestigungsteils 138 mit anschließender Fixierung am Außenmantel des Konnektors 12 sind auch vorteilhaft.

**Bezugszeichenliste**

| | | | |
|---|---|---|---|
| 10 | Vorrichtung | 34 | Durchlass (in 30) |
| 12 | Konnektor | 36 | Stirnseite (von 30) |
| 14 | Anschlussstück | 38 | Verbindungsteil |
| 16 | innerer Kragen | 39 | Nut |
| L₁₆ | (axiale) Länge (von 16) | 138 | Verbindungsteil |
| 18 | äußerer Kragen | 139 | Nut |
| L₁₈ | (axiale) Länge (von 18) | 40 | Klebstoff |
| 20 | Ringraum (zwischen 16 und 18) | 42 | Klebstoffgrenze (an 16) |
| 216 | (innerer) Ringspalt | 44 | Klebstoffgrenze (an 18) |
| 218 | (äußerer) Ringspalt | 50 | (benachbartes) Bauteil |
| 22 | Schräge | 52 | Bohrung (in 50) |
| 24 | Boden (von 20) | 60 | Ummantelung |
| 26 | Bohrung | 62 | Formteil (an 60) |
| 28 | Mittellängsachse | | |
| 30 | Leitung (Schlauch) | | |
| 32 | Wandung | | |
| 33 | Verstärkungsgewebe (in 30) | | |

## Patentansprüche

1. Vorrichtung (10) mit einer ein Fluid führenden Leitung (30) und mit einem mit dieser Leitung (30) verbindbaren Bauteil (12), bei der die Leitung (30) an wenigstens einem Ende mit einem inneren Querschnitt (34) dichtend an einem mit einer Bohrung (26) zur Weiterleitung des Fluids versehenen ersten Teil (16) des Bauteils (12) angeordnet und gegenüber diesem fixiert ist, wobei das Bauteil (12) zusätzlich mit einem das erste Teil (16) umgebenden zweiten Teil (18) versehen ist und das Ende der Leitung (30) in einem zwischen dem ersten Teil (16) und dem zweiten Teil (18) gebildeten Ringraum (20) angeordnet und mittels eines den Ringraum (20) wenigstens zum Teil ausfüllenden Klebstoffs (40) fixiert ist, wobei der Ringraum (20) einen Boden (24) aufweist, an dem wenigstens ein Abstandshalter (22) ausgebildet ist, der einen vom Boden (24) beabstandeten Anschlag für das Ende der Leitung (30) bildet, wobei der Abstandhalter (22) als eine sich am ersten Teil (16) zum Boden (24) hin erweiternde ringförmige Schräge (22) ausgebildet ist, wobei die Leitung (30) als Schlauch (30) ausgebildet ist und eine Stirnseite (36) der Leitung (30) im Zusammenwirken mit dem Abstandshalter (22) einen Abstand zum Boden (24) des Ringraums (20) bildet, so dass die dem Boden (24) zugewandte Stirnseite (36) der Leitung (30) mit vom Klebstoff (40) umgeben ist und die Leitung (30) an ihrer Innenseite und an ihrer Außenseite vom Klebstoff (40) gehalten ist, wobei die Leitung (30) mit dem ersten Teil (16) einen sehr engen Ringspalt (216) bildet wobei die Leitung (30) mit dem zweiten Teil (18) einen weiten Ringspalt (218) bildet, und wobei das erste Teil (16) eine kürzere axiale Länge (L₁₆) aufweist als die axiale Länge (L₁₈) des zweiten Teils (18).

2. Vorrichtung nach Anspruch 1,
**dadurch gekennzeichnet, dass** die Menge des Klebstoffs (40) im Ringraum (20), die Viskosität des Klebstoffs (40) und die Spaltweite des Ringspalts (216) zwischen der Leitung (30) und dem ersten Teil (16) so bemessen sind, dass die Klebstoffgrenze (42) zwischen der Leitung (30) und dem ersten Teil (16) vor dem axialen Ende des ersten Teils (16) liegt.

3. Vorrichtung nach wenigstens einem der vorhergehenden Ansprüche, **dadurch gekennzeichnet, dass** die Menge des Klebstoffs (40) im Ringraum (20), die Viskosität des Klebstoffs (40) und die Spaltweite des Ringspalts (218) zwischen der Leitung (30) und dem zweiten Teil (18) so bemessen sind, dass die Klebstoffgrenze (42) zwischen der Leitung (30) und dem zweiten Teil (18) vor dem axialen Ende des zweiten Teils (18) liegt.

4. Vorrichtung nach wenigstens einem der vorhergehenden Ansprüche, **dadurch gekennzeichnet, dass** das Bauteil (12) von einem Konnektor (12) gebildet wird, der zur Verbindung mit wenigstens einem benachbarten Bauteil (50; 60) dient.

5. Vorrichtung nach Anspruch 4,
**dadurch gekennzeichnet, dass** das benachbarte Bauteil (50) ebenfalls einen Fluid führenden Durchtritt (52) aufweist.

6. Vorrichtung nach Anspruch 4 oder 5,
**dadurch gekennzeichnet, dass** das benachbarte Bauteil (60) von einer die Leitung (30) umgebenden Ummantelung (60) gebildet wird.

7. Vorrichtung nach Anspruch 6,
**dadurch gekennzeichnet, dass** die Ummantelung (60) mit einem Formteil (62) in eine Nut (39; 139) an einem Verbindungsteil (38; 138) eingreift, das am Bauteil (12) ausgebildet oder befestigt ist.

## Claims

1. A device (10) comprising a fluid-conducting channel hose (30) and a component (12) which can be connected to this channel hose (30), wherein the channel hose (30), at at least one end with an inner cross section (34), is arranged in a sealing manner over a first part (16) of the component (12), said first part being provided with a bore (26) for conveying the fluid further, and is fixed with respect to said component, wherein the component (12) is additionally provided with a second part (18) surrounding the first part (16), and the end of the channel hose (30) is arranged in a ring space (20) formed between the first part (16) and the second part (18) and is fixed by means of an adhesive (40) at least partly filling the ring space (20), wherein the ring space (20) has a base (24), on which at least one spacer (22) is formed which forms a stop for the end of the channel hose (30) spaced apart from the base (24), wherein the spacer (22) is formed as a ringshaped chamfer (22) widening towards the base (24) of the first part (16), wherein the channel hose (30) is formed as a tube (30) and an end side (36) of the channel hose (30) concurring with the spacer (22) forms a distance to the base (24) of the ring space (20) so that the end side (36) of the channel hose (30) that faces the base (24) is surrounded by the adhesive (40) and the channel hose (30) is held by the adhesive (40) on its inner wall and outer wall, wherein the channel hose (30) forms together with the first part (16) a very narrow ring gap (216), wherein the channel hose (30) forms together with the second part (18) a wide ring gap (218), and wherein the first part (16) has a shorter axial length (L16) than the axial length (L18) of the second part (18).

2. The device as claimed in claim 1,
**characterized in that** the quantity of the adhesive (40) in the ring space (20), the viscosity of the adhesive (40) and the gap width of the ring gap (216) between the channel hose (30) and the first part (16) are dimensioned such that the adhesive boundary (42) between the channel hose (30) and the first part (16) lies before the axial end of the first part (16).

3. The device according to at least one of the preceding claims,
**characterized in that** the quantity of the adhesive (40) in the ring space (20), the viscosity of the adhesive (40) and the gap width of the ring gap (218) between the channel hose (30) and the second part (18) are dimensioned such that the adhesive boundary (42) between the channel hose (30) and the second part (18) lies before the axial end of the second part (18).

4. The device according to at least one of the preceding claims,
**characterized in that** the component (12) is formed by a connector (12) serving for connection to at least one adjacent component (50; 60).

5. The device as claimed in claim 4,
**characterized in that** the adjacent component (50) also comprises a fluid-conducting passage (52).

6. The device as claimed in claim 4 or 5,
**characterized in that** the adjacent component (60) is formed by a sheathing (60) surrounding the channel hose (30).

7. The device as claimed in claim 6,
**characterized in that** the sheathing (60) engages by a shaped part (62) into a groove (39; 139) on a connecting part (38; 138) formed or fixed on the component (12).

## Revendications

1. Appareil (10) avec un conduit (30) pour le guidage d'un fluide et avec un composant (12) pouvant être relié à ce conduit (30), dans lequel le conduit (30), à au moins une extrémité avec une section transversale intérieure (34), est disposé de manière étanche sur une première partie (16) du composant (12) pourvue d'un alésage (26) pour la transmission du fluide et est fixé par rapport à celui-ci, dans lequel le composant (12) est en outre pourvu d'une deuxième partie (18) entourant la première partie (16) et l'extrémité du conduit (30) étant disposée dans un espace annulaire (20) formé entre la première partie (16) et la deuxième partie (18) et étant fixée au moyen d'un adhésif (40) remplissant au moins en partie l'espace annulaire (20), dans lequel l'espace annulaire (20) présente une base (24) sur laquelle est formée au moins une entretoise (22) qui forme une butée pour l'extrémité du conduit (30) à distance de la base (24), dans lequel l'entretoise (22) est réalisée sous la forme d'un biseau annulaire (22) s'élargissant en direction de la base (24) de la première partie (16), dans lequel le conduit (30) est réalisé sous la forme d'un tuyau (30) et une face frontale (36) du conduit (30) forme, en interaction avec l'entretoise (22), un écart par rapport à la base (24) de l'espace annulaire (20), en sorte que la face frontale (36) du conduit (30) tournée vers la base (24) est entourée par l'adhésif (40) et que le conduit (30) est maintenu par l'adhésif (40) sur sa paroi intérieure et sur sa paroi extérieure, dans lequel le conduit (30) forme avec la première partie (16) une fente annulaire très étroite (216), dans lequel le conduit (30) forme avec la deuxième partie (18) une large fente annulaire (218), et dans lequel la première partie (16) présente une longueur axiale (L16) plus courte que la longueur axiale (L18) de la deuxième partie (18).

2. Appareil selon la revendication 1,
**caractérisé en ce que** la quantité d'adhésif (40) dans l'espace annulaire (20), la viscosité de l'adhésif (40) et la largeur de fente de l'espace annulaire (216) entre le conduit (30) et la première partie (16) sont dimensionnées de telle manière que la limite d'adhésif (42) entre le conduit (30) et la première partie (16) se situe avant l'extrémité axiale de la première partie (16).

3. Appareil selon au moins l'une des revendications précédentes, **caractérisé en ce que** la quantité d'adhésif (40) dans l'espace annulaire (20), la viscosité de l'adhésif (40) et la largeur de fente de l'espace annulaire (218) entre le conduit (30) et la deuxième partie (18) sont dimensionnées de telle manière que la limite d'adhésif (42) entre le conduit (30) et la deuxième partie (18) se situe avant l'extrémité axiale de la deuxième partie (18).

4. Appareil selon au moins l'une des revendications précédentes,
**caractérisé en ce que** le composant (12) est formé par un connecteur (12) destiné à être relié à au moins un composant adjacent (50; 60).

5. Appareil selon la revendication 4,
**caractérisé en ce que** le composant adjacent (50) comporte également un passage de guidage de fluide (52).

6. Appareil selon la revendication 4 ou 5,
**caractérisé en ce que** le composant adjacent (60) est formé par une gaine (60) entourant le conduit (30).

7. Appareil selon la revendication 6,
**caractérisé en ce que** la gaine (60) s'engage avec une pièce moulée (62) dans une rainure (39; 139) sur une pièce de connexion (38; 138) qui est formée ou fixée sur le composant (12).
